# EUROPÄISCHE PATENTSCHRIFT

(11) **EP 0 883 636 B1**
(45) Veröffentlichungstag und Bekanntmachung des Hinweises auf die Patenterteilung: **15.05.2002**
(21) Anmeldenummer: 97903322.2
(22) Anmeldetag: 19.02.1997
(51) Int. Cl.: C08G 18/36

(54) **POLYURETHANHARZE**
POLYURETHANE RESINS
RESINES POLYURETHANE

(30) Priorität: 28.02.1996 DE 19607470
(43) Veröffentlichungstag der Anmeldung: 16.12.1998
(73) Patentinhaber: Cognis Deutschland GmbH & Co. KG, 40589 Düsseldorf (DE)
(72) Erfinder: BEUER, Bernd, D-40789 Monheim (DE); GRÜTZMACHER, Roland, D-42489 Wülfrath (DE); HEIDBREDER, Andreas, D-40593 Düsseldorf (DE); KLEIN, Johann, D-40233 Düsseldorf (DE)
(86) Internationale Anmeldenummer: EP9700774
(87) Internationale Veröffentlichungsnummer: WO9731959

(56) Entgegenhaltungen:
- US-A- 4 267 081
- US-A- 5 045 590
- CHEMICAL ABSTRACTS, vol. 112, no. 18, 30.April 1990 Columbus, Ohio, US; abstract no. 160729d, OGOSHI ET AL.: "Solventless two-component urethane coating compositions" XP000063486 & JP 01 287 182 A (DAINIPPON INK AND CHEMICALS) 17.November 1989
- CHEMICAL ABSTRACTS, vol. 109, no. 10, 5.September 1988 Columbus, Ohio, US; abstract no. 75424u, KITAGAWA ET AL.: "Iron pipes coated with two-liquid solventless urethane compositions" XP002031035 & JP 06 395 216 A (KURIMOTO IRON WORKS) 26.April 1988
- A. Ehrlich, M.K. Smith, T.C. Patton, The Journal of the American Oil Chemists' Society, vol. 36 (1959), pp 149-154

## Beschreibung

### Gebiet der Erfindung

Die Erfindung betrifft die Herstellung von Polyurethanwerkstoffen aus Polyolen auf der Basis randomisierten Ricinusöls und Isocyanaten. Die mechanischen Eigenschaften der erfindungsgemäßen Polyurethanwerkstoffe sind mit denen der aus unmodifiziertem Rizinusöl erhältlichen Materialien vergleichbar, die Gelzeit der Systeme verlängert sich jedoch beträchtlich.

### Stand der Technik

Die Verwendung von Rizinusöl und/oder weiteren, Hydroxygruppen tragenden Triglyceriden zur Herstellung von Polyurethanen ist seit langem bekannt. So wird beispielsweise in **Saunders, Frisch; Polyurethanes: Chemistry and Technology, II Technology, Interscience (1964)** die Herstellung von Elastomeren aus Ricinusöl und entsprechenden Isocyanaten beschrieben. Die optimale Verarbeitung solcher üblicherweise zweikomponentigen Systeme erfordert jedoch eine möglichst lange Gelzeit, d.h. die Zeitspanne während der irreversible Änderungen der äußeren Form des Gemischs aus den zwei Komponenten möglich sind, sollte möglichst lang sein. Besonders beim Einsatz von zwei-Komponenten (2K)-Systemen zur Herstellung von Beschichtungen ist eine lange Gelzeit von Vorteil, da zum einen ein besserer Verlauf gewährleistet wird und zum anderen die dem System zur Entlüftung zur Verfügung stehende Zeit deutlich erhöht wird, was zu einer Verringerung der Blasenbildung beitragen kann. Zu kurze Gelzeiten können beispielsweise auch im Sommer oder in Ländern mit einer generell höheren Umgebungstemperatur zu einer mangelhaften Verarbeitbarkeit der Polyurethansysteme führen.

Während zur Verkürzung der Gelzeit der Einsatz von Katalysatoren wie beispielsweise Dibutylzinndilaurat seit langem den allgemeinen Stand des Fachwissens representiert, gestaltet sich eine Verlängerung der Gelzeit weitaus schwieriger. Beispielsweise konnte dies durch Zumischung niedermolekularer Polyole erreicht werden, was jedoch zu einer möglicherweise unerwünschten Abweichung von den ursprünglich geplanten Materialeigenschaften führte. Bislang scheiterte deshalb der Versuch, die kurze Gelzeit bzw. Topfzeit der Ansätze zu verlängern, ohne Veränderungen der Materialqualität im Kauf nehmen zu müssen.

Es bestand daher die Aufgabe fettchemische Polyole auf der Basis von Ricinusöl so zu modifizieren, daß die Polyolkomponente einerseits zu Materialien wie beispielsweise Gießharzen oder 2K-Schäumen mit den entsprechenden mechanischen Eigenschaften verarbeitet werden können, andererseits aber eine verlängerte Gelzeit der Polyole, wie sie beim Gebrauch derselben in 2K-Systemen wünschenswert ist, erlaubt.

Überraschenderweise wurde nun gefunden, daß randomisiertes Rizinusöl, welches durch Erhitzen von Rizinusöl unter Lithiumkatalyse bei Temperaturen von mehr als 100°C erhältlich ist, zu einer beträchtlichen Verlängerung der Gelzeit führt, ohne daß die Materialeigenschaften des Polyurethanharzes darunter leiden.

### Beschreibung der Erfindung

Gegenstand der Erfindung sind also Polyurethanharze aus Isocyanaten und einer Polyolkomponente mit einem NCO/OH-Verhältnis von 10:1 bis 1:10, dadurch gekennzeichnet, daß als Bestandteil der Polyolkomponente Ricinusöl, welches in Anwesenheit eines basischen Lithiumsalzes etwa 0,1 bis 15 Stunden auf 100 bis 280°C erhitzt wurde, in einer Menge von 0,1 bis 100 Gew.-% eingesetzt wird.

Die Modifizierung des Rizinusöls erfolgt dabei unter Bedingungen, wie sie üblicherweise für die Umesterung von Triglyceriden benötigt werden. So wird die Reaktion in der Regel unter Inertgas durchgeführt, wobei das Ricinusöl in Gegenwart der wasserfreien Lithiumsalze auf eine Temperatur von mindestens 100°C erhitzt wird. Als obere Temperaturgrenze sollten in der Regel 280°C nicht überschritten werden, da hierunter die Produktqualität leiden kann. Insbesondere zur Darstellung hellfarbiger, modifizierter Ricinusöle mit möglichst niedriger Viskosität ist es üblicherweise notwendig, unterhalb dieser Temperatur zu arbeiten. Als vorteilhaft hat sich daher das Arbeiten in einem Temperaturbereich von etwa 150 bis 280°C, insbesondere 200 bis 280°C erwiesen, wobei Temperaturen von 220 bis 260°C zu besonders guten Ergebnissen führen.
Hinsichtlich der Reaktionsdauer sollte eine Zeitspanne von 0,1 Stunden nicht unterschritten werden, längere Reaktionszeiten als etwa 15 Stunden ergeben in der Regel keine nennenswerte Verbesserung der Ergebnisse. Dem Fachmann ist der Zusammenhang zwischen Reaktionsdauer und Temperatur bekannt, so daß höhere Temperaturen durch geringere Reaktionszeiten und niedrigere Temperaturen durch höhere Reaktionszeiten in weiten Grenzen ausgeglichen werden können. Reaktionszeiten von 0,5 bis 10 Stunden führen in der Regel zu guten Ergebnissen in bezug auf die Viskosität der resultierenden Polyole, 1 bis 8 oder 2 bis 6 Stunden führen bei Reaktionstemperaturen von 220 bis 260°C üblicherweise zum gewünschten Produkt.

Zur Randomisierung können grundsätzlich alle diejenigen Katalysatoren verwendet werden, von denen bekannt ist, daß sie sich zur Katalyse von Veresterungsreaktionen eignen. In der Regel wird der Fachmann jedoch hierbei auf basische Veresterungskatalysatoren zurückgreifen, insbesondere auf die in wässriger Lösung basisch reagierenden Salze der Alkali und/oder Erdalkalimetalle wie beispielsweise Lithium, Natrium, Kalium, Calcium und/oder Magnesium.Die Konzentration solcher Katalysatoren kann, je nach Wirkungsgrad des Katalysators, zwischen wenigen ppm (parts per million) und wenigen Prozent liegen, beispielsweise im Bereich zwischen 0,1 ppm und etwa 2 Prozent. Als problematisch für den späteren Einsatz der Polyole kann sich jedoch der Restgehalt an Katalysator erweisen. Bei zu hohen Restgehalten an Alkalimetallen werden in der Regel nur Polyurethane von minderer Qualität erhalten, deren Materialeigenschaften die üblichen Anforderungen, insbesondere im Hinblick auf die Hydrolysestabilität, nicht erfüllen. In der Regel müssen daher die Katalysatoren durch einen oder mehrere verschiedene Reinigungsschritte aus dem Polyol entfernt werden. Die Restgehalte an Alkalimetallen lassen sich so auf Werte einstellen, die der gewünschten Weiterverarbeitung zum Polyurethan genügen. Auf diese Weise hergestellte modifizierte Ricinusöle sollten einen Restgehalt an Alkali oder Erdalkalimetallen von nicht mehr als etwa 10 ppm aufweisen, wobei geringere Restgehalte wie 5, 2 oder 1 ppm bis hinunter zur Nachweisgrenze der angewandten Bestimmungsmethode vorteilhaft sind.
Eine Ausnahme stellt hier das Lithiumion dar. Zum einen ermöglichen schon geringe Mengen die Umesterung, zum anderen beeinflußt es die Materialeigenschaften der resultierenden Polyurethane nicht oder nur in geringem Umfang, so daß eine Reinigung der Polyolkomponente bei der Verwendung von Lithiumkatalysatoren in der Regel entfallen kann. In der vorliegenden Erfindung werden daher basische Lithiumverbindungen wie Lithiumhydroxid, Lithiumcarbonat, Lithiumacetat, Lithiumalkoxylate oder den Lithiumsalze höherer Fettsäuren verwendet. Sie werden üblicherweise in einer Konzentration von 0,1 bis 500, bevorzugt 0,1 bis 300 ppm dem Reaktionsgemisch zugesetzt. Polyolgemische mit einem Lithiumgehalt von höchstens etwa 200 ppm sind im erfindungsgemäßen Sinne daher vorteilhaft.
Insbesondere Lithiumgehalte mit einer Obergrenze von höchstens 100, bevorzugt weniger als 70 und insbesondere weniger als 50 ppm wirken sich auf die Farb- und Hydrolysestabilität der resultierenden Polyurethane im Vergleich zu höheren oder identischen Gehalten anderer Alkalimetalle positiv aus. Die im Sinne der Erfindung am besten geigneten Polyole weisen keine oder lediglich geringe Gehalte, vorteilhafterweise weniger als 10 ppm an Alkalimetallen außer Lithium auf, wobei der Lithiumgehalt vorteilhafterweise unterhalb von 40 ppm liegen sollte.

Die auf diese Weise erhältlichen Polyole verfügen in der Regel über nahezu identische Kennzahlen wie das ursprünglich eingesetzte Ricinusöl. So sinkt die OH-Zahl üblicherweise um nicht mehr als 2 bis 7 mg KOH/g, während die Höppler-Viskosität (25°C) des modifizierten Öls im Vergleich zum eingesetzten Ricinusöl, das eine Höppler-Viskosität von 970 mPas (25 °C) aufweist, in der Regel nur um etwa 50 bis 150 mPas, bevorzugt 50 bis 120 mPas erhöht wird.

Bei dem zur Randomisierung eingesetzten Ricinusöl kann es sich sowohl um reines Ricinusöl als auch um das technische Triglycerid handeln, welches neben den Estern der Ricinolsäure noch weitere Fettsäureester enthalten kann. So könne neben der Ricinolsäure beispielsweise noch Palmitinsäure, Stearinsäure, Ölsäure und/oder Linolsäure in untergeordneten Mengen von etwa bis zu 5 %, in Einzelfällen auch darüber, vorkommen. In der Regel sollte das eingesetzte Ricinusöl jedoch mindestens 80 % Ricinolsäurereste aufweisen.

Das randomisierte Ricinusöl wird in der Regel der einzige Bestandteil des Polyolgemischs sein, es kann aber zur Modifizierung der Eigenschaften des resultierenden Polyurethans notwendig oder zumindest vorteilhaft sein, dem Polyolgemisch weitere Komponenten zuzufügen. Solche Polyolgemische können 2, 3 oder mehr Polyolkomponenten enthalten. Der Anteil des modifizierten Rizinusöls am gesamten Polyolgemisch kann deshalb auf 90, 80 oder 70 Gew.-% sinken, gegebenenfalls kann das modifizierte Rizinusöl auch nur ungefähr die Hälfte der gesamten Polyolmischung ausmachen, wobei hier ein Spielraum von einem Gewichtsprozent besteht. Jedoch auch in geringeren Anteilen kann das Rizinusöl gegebenenfalls zur Verlängerung der Gelzeit der Polyurethanharze beitragen. hierzu können schon Mengen von etwa 1 bis 49 Gew.-% aureichend sein.

Als weitere Bestandteile des Polyolgemischs eignen sich sowohl niedermolekulare Polyole als auch höhermolekulare, Hydroxygruppen tragende Moleküle bis hin zu entsprechend funktionalisierten Polymeren.
Beispielsweise können weitere Hydroxygruppen tragende Triglyceride im Polyolgemisch vorhanden sein. Die Hydroxygruppen tragenden Triglyceride können sowohl natürlichen, als auch synthetischen Ursprungs sein. So lassen sich beispielsweise ungesättigte Triglyceride durch Persäuren epoxidieren und die so erhältlichen Oxirane in sauer oder alkalisch katalysierten Ringöffnungsreaktionen mit ein- oder mehrwertigen Alkoholen zu Hydroxygruppen tragenden Triglyceriden umsetzen. Als ungesättigte Triglyceride kommen solche synthetischer und/oder natürlicher Herkunft in einem Iodzahlbereich von 30 bis 150, vorzugsweise von 85 bis 125 in Betracht.
Typische Beispiele für die Gruppe der ungesättigten Triglyceride sind Leinöl, Palmöl, Palmkernöl, Kokosöl, Erdnußöl, Teeöl, Olivenöl, Olivenkernöl, Babassuöl, Meadowfoamöl, Chaulmoograöl, Korianderöl, Sojaöl, Lardöl, Rindertalg, Schweineschmalz, Fischöl, sowie Sonnenblumenöl und Rapsöl der alten und neuen Züchtung.

Die Ringöffnung solcher Oxirane wird üblicherweise mit mono- oder polyfunktionellen Alkoholen vorgenommen, im Sinne der Erfindung ist jedoch die Verwendung monofunktioneller Alkohole bevorzugt. Zu den monofunktionellen Alkoholen zählen sowohl die aliphatischen als auch die aromatischen Alkohole, wobei die Verwendung aliphatischer Alkohole bevorzugt ist. Die verwendeten Alkohle können verzweigt oder unverzweigt, gesättigt oder ungesättigt sein, bevorzugt ist jedoch die Verwendung aliphatischer, gesättigter Alkohole. Insbesondere Methanol, Ethanol n-Propanol, iso-Propanol, n-Butanol, isoButanol, tert.-Butanol, Pentanol, Hexanol, Heptanol und die höheren Homologen werden zur Ringöffnung eingesetzt.

Gegebenenfalls können auch Fettalkohole mit 8 bis 22 C-Atomen zur Ringöffnung verwendet werden. Unter Fettalkoholen sind primäre aliphatische Alkohole der Formel **(I)** zu verstehen,

**R**^{**1**}**OH** **(I)**

in der R¹ für einen aliphatischen, linearen oder verzweigten Kohlenwasserstoffrest mit 6 bis 22 Kohlenstoffatomen und 0 und/oder 1, 2 oder 3 Doppelbindungen steht.

Typische Beispiele sind Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Linolyl-alkohol, Linolenylalkohol, Elaeostearylalkohol, Arachylalkohol, Gadoleylalkohol, Behenylalkohol, Erucylalkohol und Brassidylalkohol sowie deren technische Mischungen, die z.B. bei der Hochdruckhydrierung von technischen Methylestern auf Basis von Fetten und Ölen oder Aldehyden aus der Roelen'schen Oxosynthese sowie als Monomerfraktion bei der Dimerisierung von ungesättigten Fettalkoholen anfallen.

Gegebenenfalls können die Hydroxygruppen tragenden Triglyceride einer Umesterung mit polyfunktionellen Alkoholen unterzogen werden. Die hierzu verwendeten Alkohole weisen in der Regel Funktionalitäten von 2 bis 10, vorzugsweise von 2 bis 6 auf. Hierzu zählen insbesondere Diole, wie z.B. 1,2-Ethandiol, 1,2-Propandiol, 1,3-Propandiol, 1,4-Butandiol, 1,6-Hexandiol oder Neopentylglykol und Polyole, wie z.B. Trimethylolpropan, Glycerin, Trimethylolethan, Pentaerythrit, Sorbit und/oder oligomere Glycerine. Neben den unveränderten Alkoholen können jedoch auch deren Derivate, wie beispielsweise die Umsetzungsprodukte mit Ethylenoxyd und/oder Propylenoxyd zur Umesterung eingesetzt werden. So z.B. alkoxylierte Alkohole mit 2 oder 3 OH-Gruppen wie Ethandiol, Propandiol, Glycerin, Pentaerythrit, Trimethylolpropan und/oder Trimethylolethan.
Durch eine Zumischung der beschriebenen Art lassen sich Parameter wie beispielsweise Hydrolysestabilität, Hydrophilie oder auch die Gelzeit weiter beeinflussen.

Neben ihrer Verwendung als Alkohole bei der Umesterung können die oben aufgezählten niedermolekularen, polyfunktionellen Alkohole sowohl in unverändertem als auch in alkoxyliertem Zustand der das modifizierte Rizinusöl enthaltenden Polyolmischung beigemischt werden.

Gegebenenfalls können als weiterer Bestandteil des Polyolgemischs geeignet funktionalisierte Makromoleküle, wie beispielsweise Hydroxy-terminierte Polyester oder Polyurethane sowie geeignet funktionalisierte Polyacrylate eingesetzt werden.

Neben den Polyolgemischen sind die Polyisocyanate der zweite wichtige Baustein für die erfindungsgemäßen Polyurethan-Werkstoffe.

Isocyanate reagieren in einer dem Fachmann bekannten Weise mit freien Hydroxygruppen in einer Additionsreaktion unter Ausbildung einer Urethangruppierung. Als erfindungsgemäße Isocyanatkomponenten sind in der Regel alle üblichen, polyfunktionellen aromatischen und aliphatischen Isocyanate geeignet, wie beispielsweise auch alle oligomeren und polymeren Isocyanatverbindungen, wie sie aus der Oligomerisierung oder Cyclisierung von Polyisocyanaten unter Feuchtigkeitseinfluß oder durch Reaktion von polyfunktionellen Alkoholen mit Polyisocyanaten herstellbar sind. Die Polyisocyanate sind im Über- und im Unterschuß einsetzbar. Beispiele hierfür sind Hexamethylendiisocyanat, HDI-Trimer (Tris(6-isocyanatohexyl)isocyanurat) (Tolonate® HDT) (Rhone-Poulenc), 4,4-Diphenylmethandiisocyanat (MDI) (Desmodur® VL) (Bayer), HDI-Biuret (1,3,5-Tris(6-isocyanathexyl)biuret, Hexamethylendiisocyanatbiuret (Desmodur® N 75), (Bayer) und ein aromatisches Polyisocyanat auf der Basis von Toluylendiisocyanat (Desmodur® L 67) (Bayer). Die Isocyanate können sowohl in reiner Form als auch in technischen Gemischen mit oder ohne Lösemittel eingesetzt werden.

Die Umsetzung zwischen Polyolen und Isocyanaten findet üblicherweise in einem Temperaturbereich zwischen 0 und 100°C, vorzugsweise zwischen 5 und 50°C statt. Zur Verarbeitung werden üblicherweise die Komponenten zunächst intensiv vermischt und dann während der verbleibenden Topfzeit verarbeitet. Die Vermischung der Komponenten kann entweder durch den Anwender selbst durch Verrühren, Verquirlen oder sonstige zum Vermischen geeignete Maßnahme erfolgen, die Vermischung kann aber auch durch eine automatische Vorrichtung, wie beispielsweise bei der Entnahme aus einer unter Druck stehenden Dose mit getrennten Kammern fiir Polyol und Isocyanat, erfolgen. Das so entstandene Gemisch kann zu Beschichtungen, Gießharzen, Schäumen oder Verbundwerkstoffen weiterverarbeitet werden. Je nach Einsatzbereich kann daher das Verhältnis von NCO zu OH-Gruppen variieren. In der Regel ist ein NCO/OH-Verhältnis von 8:1 bis 1:8 oder 4:1 bis 1:4 für alle Anwendungen ausreichend. Es ist dem Fachmann jedoch bekannt, daß ein engeres Verhältnis von NCO/OH wie beispielsweise 1,5:1 bis 1:1,5 in der Regel zu höhermolekularen Produkten führt. Legt man Wert auf besonders haltbare und harte Werkstoffe, so empfiehlt sich ein NCO/OH-Verhältnis von etwa 1:1.

Gegenstand der Erfindung ist damit auch die Verwendung einer Polyolkomponente zur Herstellung von Polyurethanharzen, dadurch gekennzeichnet, daß als Bestandteil der Polyolkomponente Ricinusöl, welches in Anwesenheit eines basischen Lithiumsalzes etwa 0,5 bis 15 Stunden auf 100 bis 280°C erhitzt wurde, in einer Menge von 0,1 bis 100 Gew.-% eingesetzt wird.

Zur Herstellung von Polyurethan-Schäumen ist in der Regel noch mindestens ein Treibmittel und gegebenenfalls ein Schaumstabilisator notwendig. Darüber hinaus können noch weitere Additive zugesetzt werden, z.B. Lösungsmittel, Flammschutzmittel, Weichmacher, Zellregler, Emulgatoren, Fungizide, Füllstoffe, Pigmente und Alterungsschutzmittel.

Als Treibmittel werden vorzugsweise 1,1,1,2-Tetrafluorethan, 1,1-Difluorethan und Dimethylether eingesetzt. Es können aber auch Kohlendioxid, Distickstoffoxid, n-Propan, n-Butan und Isobutan verwendet werden. Als Treib- und Lösungsmittel dienen zweckmäßigerweise chlorfreie Fluorkohlenwasserstoffe mit Siedepunkten von -40 bis +60°C Propan/Butan-Gemische und Dimethylether oder deren Mischungen.

Weiterhin kann die schaumbildende Zusammensetzung zusätzlich Stabilisatoren enthalten. Als "Stabilisatoren" im Sinne dieser Erfindung sind einerseits Stabilisatoren zu verstehen, die eine Viskositätsstabilität der Zusammensetzung während der Herstellung, Lagerung bzw. Applikation bewirken. Hierfür sind z. B. monofunktionelle Carbonsäurechloride, monofunktionelle hochreaktive Isocyanate, aber auch nicht-korrosive anorganische Säuren geeignet. Beispielhaft seien genannt Benzoylchlorid, Toluolsulfonylisocyanat, Phosphorsäure oder phosphorige Säure.

Des weiteren sind als Stabilisatoren im Sinne dieser Erfindung Antioxidantien, UV-Stabilisatoren oder Hydrolyse-Stabilisatoren zu verstehen. Die Auswahl dieser Stabilisatoren richtet sich zum einen nach den Hauptkomponenten der Zusammensetzung und zum anderen nach den Applikationsbedingungen sowie den zu erwartenden Belastungen des Schaumkunststoffes. Üblicherweise sind hauptsächlich Antioxidantien, gegebenenfalls in Kombination mit UV-Schutzmitteln, notwendig. Beispiele hierfür sind die handelsüblichen sterisch gehinderten Phenole und/oder Thioether und/oder substituierten Benzotriazole oder die sterisch gehinderten Amine vom Typ des HALS ("Hindered Amine Light Stabilizer").
Zur Stabilisierung der Ester-Bindungen können gegebenenfalls Hydrolyse-Stabilisatoren, z.B. vom Carbodiimid-Typ, eingesetzt werden.

Ein weiterer Gegenstand der Erfindung ist die Verwendung der erfindungsgemäßem Polyurethane in Verbundwerkstoffen und/oder Blends, wobei als Blends homogene, mikrooder auch makroseparierte Mischungen mit anderen Kunststoffen zu verstehen sind. Hierzu können die Polyurethane in unterschiedlichen Mischungsverhältnissen mit einer oder mehreren zusätzlichen Komponenten zusammen zu einem Werkstoff mit verbesserten und/oder neuen Eigenschaften verarbeitet werden. Im Gegensatz zu den Füllstoffen, die hauptsächlich kostensenkende Funktion besitzen, übernehmen die im Folgenden angesprochenen Zusätze eine funktionelle, hauptsächlich mit einer Verbesserung der physikalischen Materialeigenschaften verbundene Aufgabe im Material.
Zur Herstellung von Verbundwerkstoffen werden die erfindungsgemäßen Polyurethane beispielsweise mit natürlichen oder synthetischen Fasern, Faserkurzschnitten, Geweben oder dergleichen zusammen verarbeitet. Geeignete Materialien sind z.B. die natürlichen Fasern wie Seide, Baumwolle, Wolle, Jute, Hanf, Flachs, Sisal, Stroh oder dergleichen, ebenso geeignet sind jedoch die Sekundärprodukte dieser Fasern in ihrer bearbeiteten Form, beispielsweise als Gewebe. Die Fasern können sowohl in unbehandelter als auch in behandelter Form in die erfindungsgemäßen Polyurethane eingarbeitet werden. Als geeignete Mittel zur Oberflächenbehandlung haben sich beispielsweise die Schlichten auf Siloxanbasis oder auf Polyesterbasis erwiesen, wie sie dem Fachmann für solche Oberflächenbehandlungen bekannt sind. Die so entstehenden Verbundwerkstoffe verfügen in vielen Fällen über eine hervorragende Stabilität, Reißfestigkeit, Abriebfestigkeit und Zähigkeit, wie sie für viele Anwendungen gefordert wird.
Neben den natürlichen Fasern können auch Fasern synthetischer Natur, wie beispielsweise Polyamid-, Polyester-, Polyether- oder Carbonfasern aber auch anorganische Fasern, wie beispielsweise Glasfasern und Glasfasermatten, eingarbeitet werden.
Die erfindungsgemäßen Polyurethane eignen sich damit grundsätzlich zur Herstellung von Schäumen, Gießharzen, Beschichtungen und/oder Verbundwerkstoffen.

Die folgenden Beispiele sollen die Erfindung näher erläutern, ohne sie darauf einzuschränken.

### Beispiele

Alle Angaben sind, soweit nicht ausdrücklich anders bezeichnet, in Gewichtsteilen zu verstehen.

| | Beispiel 1 | Beispiel 2 | Vergleichsbeispiel 1 | Vergleichsbeispiel 2 |
|---|---|---|---|---|
| modifiziertes | 100 | 100 | | |
| Ricinusöl | | | | |
| Ricinusöl | | | 100 | 100 |
| Zeolith-Paste | 5 | 5 | 5 | 5 |
| Polymer MDI | 41 | 41 | 41 | 41 |
| (31 % NCO | | | | |
| Gelzeit (25°C) | 53 min | 61 min | 29 min | 37 min |

## Patentansprüche

1. Polyurethanharze, erhältlich durch Umsetzung von Polyisocyanaten mit einer Polyolkomponente bei einem NCO/OH-Verhältnis von 10: 1 bis 1:10, **dadurch gekennzeichnet, daß** die Polyolkomponente 0,1 bis 100 Gew.-% eines randomisierten Ricinusöls enthält, wobei die Randomisierung des Ricinusöls durch 0,1 bis 15-stündiges Erhitzen von Ricinusöl auf 100 bis 280 °C in Gegenwart eines basischen Lithiumsalzes erfolgt.

2. Polyurethanharze nach Anspruch 1, **dadurch gekennzeichnet, daß** die Polyolkomponente höchstens 100 ppm Lithiumionen enthält.

3. Polyurethanharze nach Anspruch 1 oder 2, **dadurch gekennzeichnet, daß** das Ricinusöl auf 200 bis 280°C erhitzt wurde.

4. Polyurethanharze nach einem der Ansprüche 1 bis 3, **dadurch gekennzeichnet, daß** das NCO/OH-Verhältnis 1:4 bis 4:1 beträgt.

5. Verwendung der Polyurethane nach einem der Ansprüche 1 bis 4 zur Herstellung von Schäumen, Gießharzen, Beschichtungen und/oder Verbundwerkstoffen.

6. Verwendung von Polyolen zur Herstellung von Polyurethanharzen, **dadurch gekennzeichnet, daß** es sich bei den Polyolen um randomisiertes Ricinusöl handelt, wobei die Randomisierung des Ricinusöls durch 0,1- bis 15-stündiges Erhitzen von Ricinusöl auf 100 bis 280 °C in Gegenwart eines basischen Lithiumsalzes erfolgt.

## Claims

1. Polyurethane resins obtainable by reaction of polyisocyanates with a polyol component in an NCO:OH ratio of 10:1 to 1:10, **characterized in that** the polyol component contains 0.1 to 100% by weight of a randomized castor oil, the castor oil being randomized by heating for about 0.1 to 15 hours to 100-280°C in the presence of a basic lithium salt.

2. Polyurethane resins as claimed in claim 1, **characterized in that** the polyol component contains at most 100 ppm of lithium ions.

3. Polyurethane resins as claimed in claim 1 or 2, **characterized in that** the castor oil is heated to 200 to 280°C.

4. Polyurethane resins as claimed in any of claims 1 to 3, **characterized in that** the NCO:OH ratio is 1:4 to 4:1.

5. The use of the polyurethanes claimed in any of claims 1 to 4 for the production of foams, casting resins, coatings and/or composite materials.

6. The use of polyols for the production of polyurethane resins, **characterized in that** the polyols are randomized castor oil, the castor oil being randomized by heating for about 0.1 to 15 hours to 100-280°C in the presence of a basic lithium salt.

## Revendications

1. Résines polyuréthane que l'on peut obtenir par réaction de polyisocyanates avec un composant polyol à un rapport de NCO/OH de 10:1 à 1:10,
**caractérisées en ce que**
le composant polyol contient de 0,1 à 100 % en poids d'une huile de ricin randomisée, la randomisation d'une huile de ricin s'effectuant par un chauffage de 0,1 à 15 heures de l'huile de ricin entre 100 et 280°C cn présence d'un sel de lithium basique.

2. Résines polyuréthane selon la revendication 1,
**caractérisées en ce que**
le composant polyol contient au plus 100 ppm d'ions lithium.

3. Résines polyuréthanes selon la revendication 1 ou 2,
**caractérisées en ce qu'**
on chauffe l'huile de ricin entre 200 et 280°C.

4. Résines polyuréthanes selon l'une des revendications 1 à 3,
**caractérisées en ce que**
le rapport NCO/OH va de 1:4 à 4:1.

5. Utilisation des polyuréthanes selon l'une des revendications 1 à 4, pour la préparation de mousses, de résines coulables, de revêtement et/ou de matériaux composites.

6. Utilisation de polyols pour la préparation de résines polyuréthanes,
**caractérisée en ce qu'**
il s'agit, pour les polyols, d'huile de ricin randomisée, la randomisation de l'huile de ricin s'effectuant par un chauffage de 0,1 à 15 heures de l'huile de ricin entre 100 et 280°C en présence d'un sel de lithium basique.
